(19) **Europäisches Patentamt**

**European Patent Office**

**Office européen des brevets**

(11) Veröffentlichungsnummer: **0 417 418 A1**

## (12) EUROPÄISCHE PATENTANMELDUNG

(21) Anmeldenummer: 90112964.3

(22) Anmeldetag: 06.07.90

(51) Int. Cl.5: **C04B 28/04**, C04B 38/08, C04B 14/04, //(C04B28/04, 14:04,14:28,16:06,22:06)

(30) Priorität: 12.09.89 DE 3930458

(43) Veröffentlichungstag der Anmeldung: 20.03.91 Patentblatt 91/12

(84) Benannte Vertragsstaaten: AT BE CH DE FR LI LU

(71) Anmelder: **BAUSTOFFWERKE DURMERSHEIM GmbH**
**Malscher Strasse 17**
**W-7552 Durmersheim(DE)**

(72) Erfinder: **Rosendahl, Paul**
**Drosselweg 18**
**W-7505 Ettlingen(DE)**
Erfinder: **Wittneben, Ulrich, Dr.**
**Neue Strasse 6**
**W-7859 Efringen-Kirchen 2(DE)**

(74) Vertreter: **von Füner, Alexander, Dr. et al**
**Patentanwälte v. Füner, Ebbinghaus, Finck**
**Mariahilfplatz 2 & 3**
**W-8000 München 90(DE)**

(54) **Werktrockenmörtel.**

(57) Die Erfindung betrifft einen Werktrockenputzmörtel auf der Basis von mineralischen Bindemittel wie hydraulischen Bindemitteln und Kalkhydrat, mineralischen Sandzuschlägen, Calciumsilicathyolvat-Granulat als Leichtzuschlag, Zusatzstoffen, sowie Zusatzmitteln zur Verbesserung der Materialeigenschaften.

EP 0 417 418 A1

# WERKTROCKENMÖRTEL

Gegenstand der Erfindung ist ein Werkmörtel zur Herstellung von Putzen, insbesondere von Außenputzen.

In DIN 18550, Teil 1 ist Putz als ein an Wänden und Dekken ein- oder mehrlagig in bestimmter Dicker aufgetragener Belag aus Putzmörteln oder Beschichtungsstoffen definiert, der seine endgültigen Eigenschaften erst durch Verfestigung am Baukörper erhält. Grundsätzlich handelt es sich dabei um Gemische aus einem oder mehreren Bindemitteln, körnigen Zuschlägen sowie ggf. mehligen Zusatzmitteln und Zusatzstoffen zur Verbesserung der Frisch- und Festmörteleigenschaften. Nach der Art der Bindemittel unterscheidet man mineralischer Putze, deren Verfestigung auf der Erhärtung mineralishcer Bindemittel beruht, und Kunstharzputze, die organische Bindemittel enthalten. Das ständige Bestreben nach weitergehender Rationalisierung sowie verbesserter Produktqualität hat dazu geführt, daß Putzmörtel heute nur noch untergeordnet auf der Baustelle selbst aus den Ausgangsstoffen zusammengesetzt und gemischt werden. Diese Aufgabe wird heute weitgehend von entsprechenden Putzherstellern werkseitig übernommen, die gebrauchsfertige Mischungen als sogenannte "Werkmörtel" zur Verfügung stellen. Dabei werden fertige Gemische, die auf der Baustelle ausschließlich durch Zugabe von Wasser und durch Mischen verarbeitbar gemacht werden, gemäß DIN 18557 als "Wertrockenmörtel" bezeichnet.

Putze übernehmen eine ganze Reihe bauphysikalischer Aufgaben und dienen zugleich der Oberflächengestaltung eines Bauwerkes. Je nach Anwendung stellt die DIN 18550, Teil 1, ganz bestimmte Anforderungen an Putze, die sich in erster Linie auf eine gute Haftung am Untergrund, eine hinreichende und auf den Untergrund abgestimmte Festigkeit und den Witterungsschutz beziehen. Für baustellengefertigte Mörtel werden in DIN 18550, Teil 2, für die verschiedenen Putzmörtelgruppen bewährte Mischungsverhältnisse von Bindemitteln und Sand angegeben, die nach vorliegenden Erfahrungen die jeweils gestellten Anforderungen erfüllen und deshalb derartig zusammengesetzte Putze keiner besonderen Prüfung bedürfen. Werkmörtel besitzen jedoch in der Regel hiervon abweichende Rezepturen und müssen deshalb die Erfüllung der je nach Putzmörtelgruppe bzw. Putzart und Putzanwendung gestellten Normanforderungen in Prüfungen gemäß DIN 18555 nachweisen. Die Rezepturen verschiedener Werkmörtel für die gleiche Mörtelgruppe und die gleiche Anwendung können daher sehr unterschiedlich sein, insbesondere auch deswegen, weil Wekrmörtelhersteller zur Verbesserung der Produktqualität vielfältige und verschiedenartige Vergütungsstoffe sowie ggf. Farbpigmente einsetzen. Die Ausführung von Putzen mit mineralischen Bindemitteln ist in DIN 18550, Teil 2, geregelt. Putze können in mehreren Lagen oder auch nur in einer Lage aufgebracht werden. Die DIN 18550 kennt hierfür den Begriff des Putzsystems, das in seiner Gesamtheit die jeweiligen Anforderungen erfüllen muß.

Speziell Außenputze werden derzeit vorwiegend in zwei Lagen, nämlich einem Unterputz und einem Oberputz, hergestellt. Neben dem hohen Arbeitsaufwand ist dabei für den Arbeitsablauf zusätzlich erschwerend, daß nach dem Unterputz eine Austrocknungszeit von ca. 2 Wochen abgewartet werden muß, bis der Oberputz aufgetragen werden kann. Auf schwierigen Putzgründen, z.B. stark saugendem Mauerwerk (Gasbeton, porosierte Leichtziegel) oder glattgeschaltem Beton, sind zudem zusätzliche Maßnahmen zur Sicherstellung eines einwandfreien Putzes erforderlich (z.B. Grundieren, Spritzbewurf, mehrlagiges Auftragen naß in naß), also zusätzliche Arbeitsgänge, die ebenfalls zusätzliche Wartezeiten bis zum eigentlichen Putzauftrag erfordern und die notwendige Gerüststandzeig verlängern. Mehrlagige Außenputze müssen nach DIN 18550 eine mittlere Putzdicke von 20 mm besitzen.

Diese Nachteile können durch eine einlagig zu verarbeitenden Außenputz, wie ihn ebenfalls die Putznorm DIN 18500 bereits kennt, vermieden werden. Die notwendige mittlere Putzdicke verringert sich bei ihnen auf 15 mm, was gegenüber mehrlagiger Arbeitsweise einer Materialersparnis von 25 % entspricht.

Derartige Einlagenputze sind prinzipiell bereits bekannt und verschiedene Produkte werden bereits neben der mehrlagigen auch für die einlagige Putzweise angeboten. Als Zuschlag können sie übliche Gesteinssande, Leichtzuschläge oder Anteile beider Komponenten enthalten. Genauere Rezepturen sind nicht offenbart.

Bekannte Beispiele für einlagig zu verarbeitende Putze mit üblichen Gesteinssanden als Zuschlag sind z.B.:
- Marmorit KR 200 Luftporenkratzputz der Fa. Koch Marmorit GmbH, Bollschweil
- ip 50 Kratzputz der Baustoffwerke Durmersheim GmbH, Kalkwerk Istein
- Schwepa Kratzputz "perfekt" der Schwarzwälder Edelputz GmbH, Ottersweier
- Luftporen-Kraftzputz THP 4 der Fa. Karl Epple GmbH & Co. KG, Stuttgart.

Nachteilig an diesen Putzen ist, daß sie nur bedingt einlagig verarbeitbar sind auf stark saugenden bzw. wenig saugenden glatten Putzgründen zusätzliche Maßnahmen, wie z.B. Spritzbewurf, Grundierung, mehrlagiges Arbeiten naß in naß, erforderlich werden. Ihre hohe Rohdichte (Frischmörtel ca. 1,6 bis 1,7 kg/dm$^3$, Festmörtel ca. 1,8 kg/dm$^3$) behindert eine leichte Verarbeitung und ein gutes Standvermögen auch bei größerer Putzdicke und ermöglicht nur normale Ergiebigkeiten (ca. 25 kg/m$^2$ bei 15 mm Putzstärke). Auch wird bei ihnen als Oberflächengestaltung nur die Kratzstruktur empfohlen.

Die Verarbeitbarkeit und Ergiebigkeit können wesentlich durch den Einsatz von Leichtzuschlägen verbessert werden. Bekannte Einlagenputze mit Leichtzuschlägen sind z.B.:
- LOOK P.R.B der Firma Produits de Revetements du Batiment, Frankreich
- PF Granite der Fa. Platres Lafarge, Frankreich
- Monopral der Firma Weber et Broutin, Frankreich
- EXPAR der Fa. Prolifix S.A., Frankreich.

Nach eigenen Untersuchungen enthalten diese Putze als Leichtzuschläge Anteile an Schaumglas und Vermiculit (LOOK), Perlite und Vermiculit (PF Granite, EXPAR) bzw. nur Vermiculit (Monopral).

In den technischen Merkblättern findet sich hierzu jedoch keine Angabe.

Die Ergiebigkeit dieser Putze ist mehr oder weniger deutlich verbessert und variiert je nach Putz und Anwendung zwischen ca. 10 und 24 kg/m$^2$. Nachteilig an diesen Putzen ist, daß auch sie nicht echt einlagig sind, denn in den technischen Merkblättern wird in der Regel der Putzauftrag in zwei Lagen empfohlen, die nacheinander - allerdings innerhalb weniger Stunden - naß in naß bzw. naß in feucht auszuführen sind. Ein weiterer Nachteil ist, daß die verwendeten Leichtzuschläge Schaumglas und Vermiculit eine Eigenfarbe besitzen (Schaumglas ist dunkel, Vermiculit ist grünlichgelb), die die Formulierung eines weißen Putzes nicht mehr zuläßt und auch bei anderen Farbgebungen problematisch ist. Perlit ist zwar weiß und besitzt deshalb diesen Nachteil nicht, jedoch besitzt Perlit nur eine sehr geringe Korneigenfestigkeit mit der Folge einer teilweisen Zermahlung in der Putzmaschine sowie einer erhöhten Gefahr von Frostschäden am fertigen Putz.

Aus der EP-A-01 44 965 ist ein Putzmörtel für das maschinelle Fördern und/oder Putzen in einer Schaumglas-Granulat und nach einer Sieblinie zusammenpassenden Zuschlagsstoff und Bindemittel enthaltenden Zusammensetzung bekannt, wobei der Gewichtsanteil an Schaumglas-Granulat 6 bis 20 % bei einer Körnung von 1 bis 4 mm beträgt und daß weiterhin 7 bis 15 Gew.-% eines Mehls in Form von Kalksteinmehl, Trassmehl, Perliten, Quarzmehl und/oder Elektrofilterasche enthält und daß es weiter nach einer auf einen hohen Füllgrad ausgerichteten Sieblinie zum Schaumglas-Granulat passende, ausschließlich mineralische Zuschlagstoffe und einen Gewichtsanteil von 10 bis 50% eines mineralischen Bindemittels aufweist.

Zusammenfassend ist festzustellen, daß alle genannten Putze einen oder mehrere der folgenden Nachteile besitzen:.
- Sie sind nicht echt einlagig und bedürfen speziell auf stark saugendem und ggf. auch schwach saugendem Putzgrund zusätzlicher Maßnahmen (z.B. Vornässen, Grundierung, Spritzbewurf, meist mehrlagiges Antragen naß in naß).
- Sofern sie als Zuschlag ausschließlich normale Gesteinssande (Quarz und/oder Kalksteinkörnungen) enthalten, besitzen sie nur eine normale Ergiebigkeit (ca. 25 kg/m$^2$ bei 15 mm Auftragsstärke). Ihre Verarbeitbarket ist infolge ihrer hohen Rohdichte nicht optimal.
- Sofern sie Leichtzuschläge wie Vermiculit, Schaumglas oder Perlite enthalten, haben diese einige ungünstige Nebeneffekte wie z.B. geringe Kornfestigkeit (Perlite) mit der Folge einer teilweisen Zermahlung in der Putzmaschine sowie einer erhöhten Gefahr von Frostschäden am fertigen Putz oder Eigenfärbung (Vermiculit, Schaumglas), was die Herstellung rein weißer Putze nicht erlaubt und auch für andere Farbformulierungen problematisch ist.

Aufgabe der Erfindung war es nun, einen Werktrockenmörtel bereitzustellen, der diese Nachteile vermeidet, der wirklich in einer einzigen Schicht als Putz aufgetragen werden kann, keinerlei Vorbehandlung oder Nachbehandlung benötigt, auch in Kratzstruktur auszuführen ist und trotzdem die nötige Festigkeit, Rißfreiheit, Witterungsbeständigkeit und Ver arbeitbarkeit aufweist.

Diese Aufgabe wird wie aus den nachstehenden Ansprüchen ersichtlich gelöst.

Die bekannten Werktrockenmörtel sind nur bedingt einlagig verarbeitbar, wobei auf problematischen, z.B. stark saugenden oder kaum saugenden Wandbaustoffen, besondere Maßnahmen erforderlich sind, wie mehrlagiges Aufbringen naß-auf-naß, eine Grundierung oder Spritzbewurf. Demgegenüber kann der erfindungsgemäße Werktrockenmörtel auf allen üblichen Wandbaustoffen ohne Zusatzmaßnahmen echt einlagig aufgebracht werden.

Bei der Verarbeitung der bekannten Produkte sind häufig Zusatzausrüstungen zur Putzmaschine empfohlen, wie z.B. ein Nachmischer oder sogar spezielle Putzmaschinen, z.B. Freifall- oder Zwangsmischer in Verbindung mit einer Förderpumpe. Dies ist bei der Verarbeitung des erfindungsgemäßen Werktrockenmörtels nicht notwendig.

Die üblichen Gesteinszuschläge enthaltenden Produkte haben eine hohe Rohdichte von Frisch- (c. 1,8 kg/dm$^3$) und Festmörtel (ca. 1,6 is 1,7 kg/dm$^3$).

Demgegenüber besitzt das erfindungsgemäße Produkt eine geringe Rohdichte von Frisch- (vorzugsweise 1,4 bis 1,5 kg/dm$^3$) und Festmörtel (0,6 bis 1,3 kg/dm$^3$, vorzugsweise ca. 0,9 bis 1,1 kg/dm$^3$). Dadurch ist der erfindungsgemäße Mörtel leichter verarbeitbar und zeigt ein besseres Standvermögen, auch bei dickerem Putzauftrag.

Die bekannten Produkte enthalten überwiegend Kalkstein und/oder Quarzkörnung, während erfindungsgemäß zusätzlich ein Leichtzuschlag vorgesehen ist. Überlicherweise beträgt die Ergiebigkeit dieser bekannten Produkte, wie schon erwähnt, 25 kg/m$^2$ bei 15 mm Putzstärke, während erfindungsgemäß dann eine Ergiebigkeit von 10 bis 20 kg/m$^2$, im Schnitt 15 kg/m$^2$ bei 15 mm Putzstärke festzustellen ist.

Die Druckfestigkeit der bekannten Produkte entspricht den Mörtelgruppen PIc oder PII nach DIN 18 550. Die erfindungsgemäßen Produkte besitzen ähnliche Eigenschaften und haben außerdem noch eine günstige Biegezugfestigkeit.

Viele bekannte Mörtel zeigen eine stärkere Abhängigkeit von Frisch- und Festmörteleigenschaften von der Mischintensität, und damit von der Art der Putzmaschine, was bei der Verarbeitung der erfindungsgemäßen Produkte nicht festzustellen ist. Setzt man außerdem die in den bekannten Mörteln verwendeten Leichtzuschläge zu, so erhält man unerwünschte Nebeneffekte durch geringe Kornfestigkeit oder Eigenfarbe. Der erfindungsgemäße Leichtzuschlag ermöglich jedoch auch die Bereitstellung von Putzen weißer Farbe, wobei keine unerwünschten Zerkleinerungseffekte in der Putzmaschine zu beobachten sind und eine gute Frostbeständigkeit festzustellen ist.

Die Lösung der erfindungsgemäßen Aufgabe gelang u.a. durch die Verwendung eines Granulats von hochporösem Calciumsilikathydrat als Leichtzuschlag. Das hochporöse Calciumsilikathydrat-Granulat wird auf der Basis eines feinteiligen Kieselsäureträgers (üblicherweise Quarz) und Kalk unter Zusatz eines Schaumes oder Treibmittels als Luftporenbildner durch Autoklavhärtung hergestellt, z.B. entsprechend DE-PS 2 832 194 C 3 oder der bekannten Gasbetontechnologie.

Nach dem Härten erfolgt die Herstellung geeigneter Körnungen durch Trocknen, Brechen und Klassieren. Das derartige Calciumsilikathydrat besitzt eine hohe Porosität (ca. 80 Vol.-%) und deshalb eine geringe Schüttdichte (ca. 0,2 bis 0,6 kg/dm$^3$, vorzugsweise ca. 0,4 kg/dm$^3$). Weiterhin zeich net es sich vorteilhaft durch eine hohe Kornfestigkeit (Druckfestigkeit bis 10 N/mm$^2$) sowie eine weiße Farbe aus. Diese Leichtzuschlag wird in Mengenanteilen von 10 bis 60, vorzugsweise 15 bis 30, eingesetzt.

Ein Problem dieses Materials für den Einsatz in Werktrockenmörteln ist sein infolge der hohen offenen Porosität hohes Wasseraufnahmevermögen von ca. 170 bis 190 Gew.-%. Diese Eigenschaft bewirkt nach dem Anmischen des Putzes einen erheblichen "inneren" Wasserentzug aus dem Frischmörtel und zwar zusätzlich zu der Wasserabgabe nach außen an den Putzgrund und durch Verdunstung an die Luft. Dieser Effekt verursacht im frisch angetragenen Putzmörtel gegenüber konventionellen Putzen gesteigerte Zugspannungen, die unter Umständen zu Rissen führen können. Dieser Nachteil des Calciumsilikathydrats kann durch den zusätzlichen Einsatz von Fasern oder durch eine Hydrophobierung des Calciumsilikathydrats aufgehoben werden.

Es ist zwar prinzipiell bekannt, daß zur Aufnahme von Zugspannungen und Vermeidung von Rissen Fasern als Armierung in einen Putz eingebracht werden können und diese Maßnahme wird auch praktiziert. Alle gebräuchlichen Fasern (Cellulosefasern, Glasfasern, Kunststoffasern) besitzen jedoch neben ihrem Vorteil der Rißanfälligkeitsminderung für das Produkt auch z.T. nicht unerhebliche nachteilige Effekte: Probleme beim Einmischen, Nesterbildung, geringe Festigkeit, geringe rißmindernde Wirkung, Verschlechterung der Maschinengängigkeit, starke Behinderung der Oberflächenstrukturierung speziell durch Kratzen und Auslösung von Hautreizungen. Vorteilhaft sind Fasern mit guter Festigkeit in einer günstigen Länge, die einerseits einen hinreichenden Verbund zur Bindemittelmatrix gewährleisten, so daß sie Zugspannungen aufnehmen können, andererseits aber beim Kratzen der Putzoberfläche das Korn noch springen lassen. Ge eignete Faserlängen liegen erfindungsgemäß vorzugsweise im Bereich zwischen 0,5 und 4 mm. Besonders vorteilhaft sind erfindungsgemäß Kunststoffasern, insbesondere Polyethylen- oder Polyacrylnitrilfasern. Die Faserdosierung beträgt vorzugsweise 0,2 bis 1 Gewichtsanteile. Eine derartige Faser bestizt die genannten Nachteile nicht oder nur sehr eingeschränkt und läßt auch bei höherer Dosierung noch eine einwandfreie Oberflächenstrukturierung durch Kratzen zu.

Eine andere Möglichkeit zur Vermeidung der durch den starken Wasserentzug des hochporösen Calciumsilikathydrats bedingten Rißanfälligkeit des Putzes besteht darin, die Wasseraufnahme durch eine Hydrophobierung der Calciumsilikathydrat-Körnung zu reduzieren oder aufzuheben. Ermöglicht wird dies durch das Aufsprühen üblicher alkalibeständiger Hydrophobierungsmittel, z.B. auf der Basis von Fettsäuren (z.B.) Oleate, Stearate) oder auf siliziumorganischer Basis (z.B. alkalibeständig formulierte Silikone, Silane, Siloxane).

Durch den Einsatz besagten Calciumsilikathydrat-Leichtzuschlags, insbesondere in Kombination mit besagten Faserzusätzen und/oder einer vorangegangenen Hydrophobierung des Leichtzuschlages kann ein leichter, d.h. sehr ergiebiger und leicht zu verarbeitender Putz hergestellt werden, der auf allen üblichen Wandbaustoffen echt einlagig verarbeitet und in vielfältigen Oberflächenstrukturen incl. der Kratzstruktur in allen Farben incl. Weiß ausgeführt werden kann.

Unter hydraulische Bindemittel entsprechend dem erfindungsgemäßen Vorschlag fallen Zemente, PM-Binder, hochhydraulischer oder hydraulischer Kalk, insbesondere weißer Portlandzement.

Unter Kalkhydrat versteht man z.B. Weißkalkhydrat oder Wasserkalkhydrat nach DIN 1060.

Anorganische Füllstoffe umfassen die in der Branche üblichen Füllstoffe wie Gesteinsmehle, insbesondere Kalkstein- bzw. Marmormehle, Quarzmehle, Traßmehle sowie Flugaschen und synthetische mineralische Mehle.

Für die Zuschläge soll hier die in DIN 18550 gegebene Definition für mineralische Zuschläge mit dichtem Gefüge gelten. In erster Linie zählen hierzu die in dere Branche üblichen Gesteinskörnungen, wie z.B. Kalkstein- und/oder Quarzkörnungen, die als kornabgestufte Sande von 0 bis 5 mm Korngröße eingesetzt werden.

Als Leichtzuschlag wird vorgeschlagen, Calciumsilikathydrat einzusetzen, und zwar in einer Menge von 10 bis 60 Gewichtsanteilen, wobei 15 bis 30 Gewichtsanteile bevorzugt sind. Das Calciumsilikathydrat ist ein hochporöses Calciumsilikathydrat mit Korngrößen im Bereich von 0 bis 3 mm, vorzugsweise 0 bis 1,5 mm, und einer Schüttdichte von ca. 0,4 kg/dm$^3$.

Unter übliche Zusätze fallen Wasserrückhaltemittel, z.B. Methylcellulose, sowie Plastifizierungsmittel, z.B. Tenside auf der Basis von Natriumlaurylsulfat, Olefinsulfonat oder Polymerisationsprodukten aus Propylenoxid und Ethylenoxid. Wasserrückhaltende Mittel mindern nicht nur den Wasserentzug aus dem aufgetragenen Naßmörtel, sondern fördern auch die Haftfähigkeit des nassen Putzmörtels an der trockenen Wand und verbessern Verarbeitbarkeit und Maschinengängigkeit. Plastifizierungsmittel wie Tenside beeinflussen die Luftporenbildung und sind vorteilhaft für eine gute Verarbeitbarkeit und Maschinengängigkeit.

Hydrophobierungsmittel sind die bekannten, z.B. Oleate, Ste arate und Mittel auf siliciumorganischer Basis. Sie dienen der Verbesserung des Witterungs- bzw. Schlagregenschutzes von Außenputzen.

Den Bedürfnissen entsprechend können die Putze farbig sein, wobei die Farbpigmente lichtecht und alkalibeständig sein müssen. Dazu verwendet man die bekannten Pigmente, d.h. Metalloxide wie z.B. Eisenoxide, Chromoxid und Kobaltoxid oder farbige Gesteinsmehle. Es können auch Mischungen bekannter Pigmente eingesetzt werden.

Besonders bevorzugt ist es, Fasern einzusetzen, und zwar in einer Menge von 0,2 bis 1,0 Gewichtsanteilen, vorzugsweise in 0,4 bis 0,6 Gewichtsanteilen. Diese Fasern sind insbesondere Kunststoffasern, wobei Polyethylen- und Polyacrylnitrilfasern besonders bevorzugt sind. Als organische Fasern können Cellulosefasern und/oder Kunststoffasern eingesetzt werden, als anorganische Fasern z.B. Glasfasern.

Gegenstand der Erfindung ist also ein Werktrockenmörtel auf der Basis von mineralischen Bindemitteln wie Hydraulischen Bindemitteln und Kalkhydrat, mineralischen Sandzuschlägen, einem Leichtzuschlag, Zusatzstoffen, sowie Zusatzmitteln zur Verbesserung der Materialeigenschaften, der dadurch gekennzeichnet ist, daß er als Bindemittel ein hydraulisches Bindemittel in einem Gewichtsanteil von 10 bis 28 Kalkhydrat in einem Gewichtsanteil von 5 bis 20 als Zusatzstoff anorganische Füllstoffe in einem Gewichtsanteil von 5 bis 15 als Zuschlag kornabgestufte mineralische Sande in einem Gewichtsanteil bis 55 als Leichtzuschlag Calciumsilikathydrat-Granulat in einem Gewichtsanteil von 10 bis 60 Zusatzmittel in einem Gewichtsanteil von 0,1 bis 3 enthält.

Besonders bevorzugt ist es, daß das hydraulische Bindemittel in einer Menge von 15 bis 23 Gewichtsanteilen vorliegt, während Kalkhydrat vorzugsweise in einer Menge von 8 bis 15 Gewichtsantielen vorliegen kann.

Besonders bevorzugt ist es, daß Gesteinsmehl in einer Menge von 8 bis 15 Gewichtsanteilen vorliegt, während Gesteinskörnung in einer Menge von 30 bis 45 Gewichtsanteilen vorliegen kann.

Besonders bevorzugt ist es, daß der Leichtzuschlag in einer Menge von 15 bis 30 Gewichtsanteilen vorliegt und das hydraulische Bindemittel Portlandzement ist.

Besonders bevorzugt ist es, daß das Kalkhydrat eines nach DIN 1060 ist und daß das Gesteinsmehl Marmormehl ist.

Besonders bevorzugt ist es, daß das Calciumsilikathydrat ein hochporöses Calciumsilikathydrat mit Korngrößen im Bereich von 0 bis 3 mm und einer Schüttdichte von ca. 0,4 kg/dm$^3$ ist.

Besonders bevorzugt ist es, daß der Werktrockenmörtel Fasern in einer Menge von 0,2 bis 1,0 Gewichtsanteilen enthält.

Besonders bevorzugt ist es, daß der Werktrockenmörtel Kunststoffasern wie Polyethylen- oder Polyacrylnitrilfasern, enthält.

Besonders bevorzugt ist es, daß der Werktrockenmörtel hydrophobiertes Calciumsilikathydrat enthält.

Besonders bevorzugt ist es, daß der Werktrockenmörtel ein Wasserrückhaltemittel in einer Menge von 0,1 bis 0,3 Gewichtsanteilen enthält.

Besonders bevorzugt ist es, daß der Werktrockenmörtel ein Plastifizierungsmittel in einer Menge von 0,008 bis 0,05 Gewichtsanteilen enthält.

Besonders bevorzugt ist es, daß der Wektrockenmörtel ein Hydrophobierungsmittel in einer Menge von 0,1 bis 0,5 Gewichsanteilen enthält.

Besonders bevorzugt ist es, daß der Werktrockenmörtel Pigmentfarbstoffe in einer Menge von 0,001 bis 5 Gewichtsanteilen enthält.

Beispiel 1

Werktrockenmörtel aus
23 Gewichtsanteilen Weißzement
8 Gewichtsanteilen Kalkhydrat
11 Gewichtsanteilen Marmormehl
vermischt mit Zuschlagstoffen aus
23 Gewichtsanteilen Calciumsilikathydrat-Granulat mit einer Körnung von ca. 0,25 bis 1,5 mm und
37 Gewichtsanteilen Kalksteinbrechsande
unter Zugabe von
0,6 Gewichtsanteilen Polyacrylnitrilfasern
0,2 Gewichtsanteilen Methylcellulose
0,01 Gewichtsanteilen von Tensiden auf der Basis von Natriumlaurylsulfat
0,3 Gewichtsanteilen Natriumoleat.

Zur Farbgestaltung können entsprechende Pigmente zugegeben werden.

Das Material läßt sich mit allen üblichen Putzmaschinen ohne Zusatzausrüstung einwandfrei echt einlagig zu einem weißen oder farbigen Außenputz verarbeiten. Auch bei Auftrag auf stark saugfähigem Mauerwerk (Leichtzeigel, Gasbeton), selbst unter warmen, windigen Witterungsbedingungen traten im Putz keine Risse auf. Der Mörtel besitzt eine hohe Ergiebigkeit von ca. 15 kg/m² bei 15 mm Putzdicke und sehr gute Verarbeitungseigenschaften. Der Putz besitzt eine gute Haftung am Putzgrund, entspricht in seiner Festigkeit der Mörtelgruppe P II und erfüllt die Anforderungen der DIN 18550 an wasserabweisende Außenputze. Die Oberflächengestaltung konnte in frei strukturierter und verwaschener Struktur, in Spritzputzstruktur und in Kratzstruktur einwandfrei ausgeführt werden.

Beispiel 2

Werktrockenmörtel aus
17 Gewichtsanteilen Weißzement
13 Gewichtsanteilen Kalkhydrat
10 Gewichtsanteilen Marmormehl
18 Gewichtsanteilen Calciumsilikathydrat-Granulat
25 Gewichtsanteilen Quarzkörnungen
17 Gewichtsanteilen Kalksteinbrechsande
0,3 Gewichtsanteilen Cellulosefasern

0,2 Gewichtsanteilen Methylcellulose
0,01 Gewichtsanteilen an Polymerisationsprodukte aus Propylenoxid und Ethylenoxid
0,3 Gewichtsanteilen Natriumoleat
0,5 Gewichtsanteilen Eisenoxid.

Verarbeitungseigenschaften und Ergiebigkeit sind gut und vergleichbar mit Beispiel 1, ebenso die Festigkeiten. Die Anforderungen der DIN 18550 an wasserabweisend Außenputze werden erfüllt. Es sind verschieden Oberflächenstrukturen inkl. Kratzstruktur möglich.

Beispiel 3

Werktrockenmörtel aus
23 Gewichtsanteilen Weißzement
18 Gewichtsanteilen Kalkhydrat
11 Gewichtsanteilen Marmormehl
23 Gewichtsanteilen hydrophobiertem Calciumsilikathydrat-Graunulat
37 Gewichtsanteilen Kalksteinbrechsande
0,2 Gewichtsanteilen Methylcellulose
0,01 Gewichtsanteilen Olefinsulfonat
0,2 Gewichtsanteilen Natriumoleat.

Dieser Trockenmörtel benötigt keine Fasern zur Aufnahme von Zugspannungen, da hier ein wasserabweisend eingestelltes Calciumsilikathydrat-Granulat eingesetzt wird. Die sich ergebenden Verarbeitungs- und Materialeigenschaften sind vergleichbar mit den in Beispiel 1 beschriebenen. Der Putz blieb sowohl auf Kalksandstein als auch auf stark saugfähigem Gasbeton-Mauerwerk rissefrei und besaß eine einwandfreie Haftung. Die Anforderungen der DIN 18550 an wasserabweisende Putze werden erfüllt. Die Oberfläche des Putzes kann neben anderen Strukturmöglichkeiten auch gut in Kratzstruktur ausgeführt werden.

Beispiel 4

Werktrockenmörtel wie in Beispiel 3, jedoch mit
37 Gewichtsanteilen hydrophobiertem Calciumsilikathydrat-Granulat
23 Gewichtsanteilen Kalksteinbrechsanden.

Diese Variante ergibt einen Mörtel mit besonders hoher Ergiebigkeit (ca. 12 kg/m² bei 15 mm Putzdicke) und leichter Verarbeitbarket. Im übrigen gilt ähnliches wie in Beispiel 3 gesagt.

Beispiel 5

Werktrockenmörtel aus
12 Gewichtsanteilen Zement

10 Gewichtsanteilen Kalkhydrat

15 Gewichtsanteilen Marmormehl

20 Gewichtsanteilen Calciumsilikathydrat-Granulat

43 Gewichtsanteilen Kalksteinbrechsanden

0,5 Gewichtsanteilen Polyethylenfasern

0,3 Gewichtsanteilen Methylcellulose

0,01 Gewichtsanteilen Tenside auf der Basis von Natriumlaurylsulfat.

Hinsichtlich der günstigen Verarbeitungseigenschaften und der Ergiebigkeit gilt ähnliches wie in den Beispielen 1 bis 3. Die Festigkeiten entsprechen jedoch der Mörtelgruppe P Ic und der Putz ist nicht wasserabweisend im Sinne der DIN 18550 und daher in dieser Formulierung für Innenwandputze geeignet.

**Ansprüche**

1. Werktrockenmörtel auf der Basis von mineralischen Bindemitteln wie hydraulischen Bindemitteln und Kalkhydrat, mineralischen Sandzuschlägen, einem Leichtzuschlag, Zusatzstoffen sowie Zusatzmitteln zur Verbesserung der Materialeigenschaften, dadurch **gekennzeichnet,** daß er als Bindemittel
ein hydraulisches Bindemittel in einem Gewichtsanteilen von 10 bis 28
Kalkhydrat in einem Gewichtsanteilen von 5 bis 20
als Zusatzstoff anorganische Füllstoffe in einem Gewichtsanteilen von 5 bis 15
als Zuschlag kornabgestufte mineralische Sande in einem Gewichtsanteilen von bis 55
als Leichtzuschlag Calciumsilikathydrat-Granulat in einem Gewichtsanteilen von 10 bis 60
Zusatzmittel in einem Gewichtsanteilen von 0,1 bis 3
enthält.

2. Werktrockenmörtel nach Anspruch 1, dadurch **gekennzeichnet,** daß er das hydraulische Bindemittel in 15 bis 23 Gewichtsanteilen enthält.

3. Werktrockenmörtel nach einem der vorangegenen Ansprüche, dadurch **gekennzeichnet,** daß er das Kalkhydrat in 8 bis 15 Gewichtsanteilen enthält.

4. Werktrockenmörtel nach einem der vorangegangenen Ansprüche, dadurch **gekennzeichnet,** daß er Gesteinsmehl in 8 bis 15 Gewichtsanteilen enthält.

5. Werktrockenmörtel nach einem der vorangegangenen Ansprüche, dadurch **gekennzeichnet,** daß er Gesteinskörnung in 30 bis 45 Gewichtsanteilen enthält.

6. Werktrockenmörtel nach einem der vorangegangen Ansprüche, dadurch **gekennzeichnet,** daß er den Leichtzuschlag in 15 bis 30 Gewichtsanteilen enthält.

7. Werktrockenmörtel nach einem der vorangegangenen Ansprüche, dadurch **gekennzeichnet,** daß das hydraulische Bindemittel Portlandzement ist.

8. Werktrockenmörtel nach einem der vorangegangenen Ansprüche, dadurch **gekennzeichnet,** daß das Kalkhydrat eines nach DIN 1060 ist.

9. Werktrockenmörtel nach einem der vorangegangenen Ansprüche, dadurch **gekennzeichnet,** daß das Gesteinsmehl Marmormehl ist.

10. Werktrockenmörtel nach einem der vorangegangenen Ansprüche, dadurch **gekennzeichnet,** daß die Gesteinskörnung Kalksteinkörnung ist.

11. Werktrockenmörtel nach einem der vorangegangenen Ansprüche, dadurch **gekennzeichnet,** daß das Calciumsilikathydrat ein hochporöses Calciumsilikathydrat mit Korngrößen im Bereich von 0 bis 3 mm und einer Schüttdichte von ca. 0,4 kg/dm$^3$ ist.

12. Werktrockenmörtel nach einem der vorangegangenen Ansprüche, dadurch **gekennzeichnet,** daß er Fasern in einer Menge von 0,2 bis 1,0 Gewichtsanteilen enthält.

13. Werktrockenmörtel nach Anspruch 12, dadurch **gekennzeichnet,** daß er Kunststoffasern enthält.

14. Werktrockenmörtel nach Anspruch 13, dadurch **gekennzeichnet,** daß er Polyethylen- oder Polyacrylnitrilfasern enthält.

15. Werktrockenmörtel nach Anspruch 11, dadurch **gekennzeichnet,** daß er hydrophobiertes Calciumsilikathydrat enthält.

16. Werktrockenmörtel nach einem der vorangegangenen Ansprüche, dadurch **gekennzeichnet,** daß er ein Wasserrückhaltemittel in einer Menge von 0,1 bis 0,3 Gewichtsanteilen enthält.

17. Werktrockenmörtel nach einem der vorangegangenen Ansprüche, dadurch **gekennzeichnet,** daß er ein Plastifizierungsmittel in einer Menge von 0,008 bis 0,05 Gewichtsanteilen enthält.

18. Werktrockenmörtel nach einem der vorangegangen Ansprüche, dadurch **gekennzeichnet,** daß er ein Hydrophobierungsmittel in einer Menge von 0,1 bis 0,5 Gewichtsanteilen enthält.

19. Werktrockenmörtel nach einem der vorangegangenen Ansprüche, dadurch **gekennzeichnet,** daß er Pigmentfarbstoffe in einer Menge von 0,001 bis 5 Gewichtsanteilen enthält.

**Europäisches Patentamt**

# EUROPÄISCHER RECHERCHENBERICHT

Nummer der Anmeldung

**EP 90 11 2964**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | JAPANESE PATENTS GAZETTE, Woche 7930, Sektion CH, Nr. C79-55123B, Derwent Publications Ltd, Londen, GB; & JP-A-54 073 832 (OSAKA PACKING SEIZO) 13-06-1979 * Gesamtes Dokument * − − − | | C 04 B 28/04 C 04 B 38/08 C 04 B 14/04 // (C 04 B 28/04 C 04 B 14:04 |
| A | DE-A-2 509 179 (DRACHOLIN CHEM. FABRIK) * Gesamtes Dokument * − − − | | C 04 B 14:28 C 04 B 16:06 C 04 B 22:06 ) |
| A | DE-A-1 471 224 (K. HAUG SEN et al.) * Gesamtes Dokument * − − − | | |
| D,A | EP-A-0 144 965 (QUICK-MIX GRUPPE GmbH) − − − | | |
| D,A | EP-A-0 007 586 (MINORA) − − − − − | | |

|  | RECHERCHIERTE SACHGEBIETE (Int. Cl.5) |
|---|---|
|  | C 04 B |

Der vorliegende Recherchenbericht wurde für alle Patentansprüche erstellt

| Recherchenort | Abschlußdatum der Recherche | Prüfer |
|---|---|---|
| Den Haag | 05 November 90 | KUEHNE H C |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument